# EUROPÄISCHE PATENTSCHRIFT

(11) **EP 3 439 228 B1**
(45) Veröffentlichungstag und Bekanntmachung des Hinweises auf die Patenterteilung: **29.07.2020**
(21) Anmeldenummer: 17184450.9
(22) Anmeldetag: 02.08.2017
(51) Int. Cl.: H04L 9/08

(54) **VERFAHREN UND VORRICHTUNGEN ZUM ERREICHEN EINER SICHERHEITSFUNKTION, INSBESONDERE IM UMFELD EINER GERÄTE- UND/ODER ANLAGENSTEUERUNG**
METHOD AND DEVICES FOR ACHIEVING A SAFETY FUNCTION, PARTICULARLY IN THE VICINITY OF A DEVICE CONTROL AND/OR SYSTEM CONTROL
PROCÉDÉ ET DISPOSITIF PERMETTANT LA RÉALISATION D'UNE FONCTION DE SÉCURITÉ, NOTAMMENT DANS L'ENVIRONNEMENT D'UNE COMMANDE D'APPAREIL ET/OU D'INSTALLATION

(43) Veröffentlichungstag der Anmeldung: 06.02.2019
(73) Patentinhaber: Siemens Aktiengesellschaft, 80333 München (DE)
(72) Erfinder: Aschauer, Dr. Hans, 81829 München (DE); Falk, Dr. Rainer, 85586 Poing (DE); Fischer, Kai, 85598 Baldham (DE); Fries, Steffen, 85598 Baldham (DE); Heintel, Markus, 81377 München (DE); Klasen, Dr. Wolfgang, 85521 Ottobrunn (DE); Pfau, Axel, 80333 München (DE)

(56) Entgegenhaltungen:
- DE-A1-102010 011 657
- US-A1- 2012 072 736
- Hugo Krawczyk: "Cryptographic Extraction and Key Derivation: The HKDF Scheme" In: "LECTURE NOTES IN COMPUTER SCIENCE", 1. Januar 2010 (2010-01-01), Springer Berlin Heidelberg, Berlin, Heidelberg, XP055203776, ISSN: 0302-9743 ISBN: 978-3-54-045234-8 Bd. 6223, Seiten 631-648, DOI: 10.1007/978-3-642-14623-7_34, * Seite 9, Zeile 15 - Seite 14, Zeile 6 *
- YINGLI ZENG ET AL: "A key escrow scheme to IOT based on Shamir", 2013 INTERNATIONAL CONFERENCE ON COMMUNICATIONS, CIRCUITS AND SYSTEMS (ICCCAS), IEEE, Bd. 2, 15. November 2013 (2013-11-15), Seiten 94-97, XP032578377, DOI: 10.1109/ICCCAS.2013.6765293 [gefunden am 2014-03-11]

## Beschreibung

Die Erfindung betrifft (Betriebs-)Verfahren und Vorrichtungen für eine Sicherheits-Steuerungseinrichtung zur Steuerung eines Geräts oder einer Anlage, wobei die Sicherheits-Steuerungseinrichtung ein Steuerungs-Grundgerät sowie ein Sicherheitsmodul umfasst, wobei das Sicherheitsmodul mit dem Steuerungs-Grundgerät verbindbar ist oder verbunden ist.

Es besteht ein Bedarf, um mit IT-Security-Mechanismen Produkte, beispielsweise Geräte, Gerätekomponenten oder Softwarekomponenten, vor Manipulationen und/oder einem Reverse Engineering zu schützen. Kryptographische IT-Security-Mechanismen sind bereits beispielsweise in Smart Devices, beispielsweise in Geräten des Internets der Dinge, von cyberphysikalischen Systemen, von Automatisierungssystemen der Energietechnik oder von Fertigungssystemen, der Betriebstechnik und von anderen Anlagen in Einsatz.

Der Begriff "Security" bzw. "Sicherheit" bezieht sich im Rahmen der vorliegenden Beschreibung im Wesentlichen auf die Sicherheit, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird. Ein Modul kann hierbei als eine Hardware- und/oder Funktionseinheit, die software- und/oder firmwaremäßig ausgestaltet sein kann, ausgeprägt sein. Die Funktion kann beispielsweise mittels eines Prozessors und/oder einer Speichereinheit zum Speichern von Programmbefehlen ausgeführt werden.

Der Einsatz derartige Sicherheits-Steuerungseinrichtungen bzw. -Verfahren sind möglich. Es ist beispielsweise ein Sicherheitsmodul in der europäische Patentanmeldung EP 16172472.9 bereits vorgeschlagen worden. Hierbei umfasst die Sicherheits-Steuerungseinrichtung ein Steuerungs-Grundgerät sowie ein Sicherheitsmodul, wobei das Sicherheitsmodul mittels einer Datenverbindung über eine Datenschnittstelle mit dem Steuerungs-Grundgerät verbunden ist.

In der Europäischen Anmeldung EP 16172887.8 ist eine Gruppenauthentisierung von Geräten oder auch Komponenten derselben schon vorgeschlagen worden. Nur wenn alle originalen Komponenten im Gerät verfügbar sind, kann sich das Gerät authentifizieren.

Allgemein bekannt ist eine secure Multi-Party Computation (MPC) (https://en.wikipedia.org/wiki/Secure_multi-party_computation) bekannt. In einer Mehr-Parteien-Kommunikation (Multi-Party Communications) bzw. Nachrichtenaustausch kommt es in der Regel darauf an, dass die Parteien private (geheimzuhaltende) Daten mit einer öffentlichen Funktion ggf. mittels einer Vertrauensstelle berechnen lassen können und ein Ergebnis erhalten ohne ihre privaten Daten offenlegen zu müssen. Die "Vertrauensstelle" prüft dabei, ob die Parteien bzw. deren an der Kommunikation beteiligten Geräte vertrauenswürdig sind. Die verschiedenen Eingabewerte für die Berechnung sind dabei geheim und jeweils nur einer Partei (bzw. einer Untermenge derselben) bekannt. Für die Berechnung soll_keine_zusätzliche vertrauenswürdige Partei benötigt werden. Kryptographische Operationen im Zusammenhang mit MPC sind in der Regel rechenaufwändig.

Nach https://www.dyadicsec.com/technology_mpc/ gibt es ein virtuelles HSM (Hardware Security Module). Ein HSM bezeichnet ein internes oder externes Peripheriegerät für die effiziente und sichere Ausführung kryptographischer Operationen oder Applikationen. Dies ermöglicht zum Beispiel, die Vertrauenswürdigkeit und die Integrität von Daten und den damit verbundenen Informationen in sicherheitskritischen IT-Systemen sicherzustellen. Beim virtuellen HSM wird der kryptographische Schlüssel eines virtuellen HSM auf mehrere Server-Maschinen verteilt. Dabei berechnen die mehreren Server-Maschinen unter Nutzung von MPC gemeinsam eine kryptographische Operation, ohne dass der HSM-Schlüssel vorliegt.

Hinsichtlich der oben erwähnten IT-Security-Mechanismen sind insbesondere im industriellen Umfeld weniger aufwändige Security-Verfahren bzw. -einrichtungen gefragt.

US 2012/072736 A1 betrifft ein Speichergerät, ein Speichersystem und ein Authentisierungsverfahren. Das Speichergerät weist einen flüchtigen Speicher auf, dessen Daten gelöscht werden, wenn die Spannungsversorgung getrennt wird. Das Speichergerät ist abnehmbar mit beliebigen Host-Geräten verbindbar.

DE 10 2010 011657 A1 betrifft eine Vorrichtung zum Bereitstellen mindestens eines sicheren kryptographischen Schlüssels für die Ausführung einer kryptographischen Sicherheitsfunktion durch ein Steuergerät, das dafür einen kryptographischen Schlüssel anfordert, wobei aus einem ersten Konfigurationsspeicher ein für die Sicherheitsfunktion vorgesehener konfigurierter Schlüssel ausgelesen wird und anhand des ausgelesenen konfigurierten Schlüssels geprüft wird, ob in einem zweiten Konfigurationsspeicher ein zu dem ausgelesenen konfigurierten Schlüssel zugehöriger sicherer Ersatzschlüssel gespeichert ist, welcher anstatt des konfigurierten Schlüssels für die Ausführung der Sicherheitsfunktionen dem Steuergerät bereitgestellt wird.

Hugo Krawczyk: "Cryptographic Extraction and Key Derivation: The HKDF Scheme" betrifft das Verfahren der Schlüsselableitung (key derivation function (KDF)). Das resultierende KDF-Design kann eine große Vielfalt von KDF-Anwendungen unter geeigneten Annahmen über die zugrunde liegenden Hash-Funktionen unterstützen. Besondere Aufmerksamkeit und Anstrengung wird darauf verwendet, diese Annahmen für jedes Nutzungsszenario so weit wie möglich zu minimieren.

Yingli Zeng Et Al: "A key escrow scheme to IOT based on Shamir" betrifft die Schlüsselwiederherstellung mit einem "Shamir Treshold Algorithmus".

Es ist Aufgabe der vorliegenden Erfindung, Verfahren und Vor- bzw. Einrichtungen mit verbesserten Sicherheits-Eigenschaften insbesondere in einem industriellen Umfeld zur Verfügung zu stellen.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht ein Verfahren zum Erreichen einer Sicherheitsfunktion für eine Sicherheits-Steuerungseinrichtung zur Steuerung eines Geräts oder einer Anlage, mit den Merkmalen des Patentanspruchs 1.

Die Schritte des erfindungsgemäßen Verfahrens lauten wie folgt:
- Bereitstellen eines Steuerungs-Grundgerätes (G) zum Steuern eines verbundenen Gerätes oder einer verbundenen Anlage mittels des Ablaufs eines Steuerungsprogramms im Steuerungs-Grundgerät
- Bereitstellen eines Sicherheitsmoduls (S) zur Bereitstellung oder Ausführung einer kryptographischen Funktionalität für das Steuerungs-Grundgerät (G) und Verbinden des Sicherheitsmoduls (S) mittels einer Datenverbindung mit dem Steuerungs-Grundgerät (G)
- Bereitstellen zumindest eines ersten Teilgeheimnisses KS1), welches im Steuerungs-Grundgerät (G) gespeichert ist,
- Bereitstellen zumindest eines zweiten Teilgeheimnisses KS2), welches im Sicherheitsmodul (S) gespeichert ist,
- Zusammenführen des zumindest einen ersten und zweiten Teilgeheimnisses für das Erreichen der Sicherheitsfunktion,
- Zerlegen des zumindest einen ersten Teilgeheimnisses in eine Vielzahl von Teilstücken einer vorgebbaren Größe und schrittweise-Zusammenführen der Vielzahl von Teilstücken mit dem zumindest zweiten Teilgeheimnis mittels einer Berechnungsvorschrift, wobei die Teilstücke entsprechend der Größe und Menge innerhalb eines vorgebbaren Zeitabschnitts während der Ausführung der Berechnungsvorschrift verarbeitbar sind.

In jeden Einzelschritt der Berechnungsvorschrift können nur diejenigen Teilstücke eingehen, welche in dem Einzelschritt verarbeitet werden können.

Dabei ist insbesondere in einem industriellen Umfeld (Anlage, Fertigungssystem o.ä.) das Sicherheitsmodul als "vertrauenswürdig" gegenüber dem Steuerungs-Grundgerät und umgekehrt einzustufen. Somit können die eingangs erwähnten aufwändigen Security-Mechanismen vermieden werden.

Mit anderen Worten ausgedrückt, wird die Sicherheitsfunktion z.B. die MAC (Message Authentification Code) durch die in den Einzelschritten verarbeiteten Teilstücke berechnet. Das Zusammenführen der Teilstücke und der Teilgeheimnissen führt nicht explizit zu einem Gesamtgeheimnis, welches Gegenstand eines Angriffs werden kann.

Unter "Bereitstellen" kann im Zusammenhang mit der Erfindung beispielsweise ein Erstellen, Laden oder ein Speichern, des Teilgeheimnisses auf oder von einem Datenträger bzw. Plattform verstanden werden.

Unter einer "Berechnungsvorschrift" kann im Zusammenhang mit der Erfindung beispielsweise ein Aufteilen des Geheimnisses in (mehrere) Teilgeheimnisse verstanden werden, wobei die Teilgeheimisse wiederum in Teilstücke unterteilt sein können. Eine Berechnungsvorschrift kann insbesondere angeben, wie das Geheimnis auf die Teilinformationen verteilt wird. Es ist beispielsweise möglich, dass das Geheimnis beispielsweise anhand einer vordefinierten Regel in unterschiedlich große Teile zerlegt wird. Die Berechnungsvorschrift kann beispielsweise auch festlegen, dass insbesondere nur ein Teil der Teilgeheimnisse notwendig ist, um das Geheimnis aus den Teilgeheimnissen zu berechnen. Mit anderen Worten ist damit insbesondere das Geheimnis anhand eines unvollständigen Geheimnisses berechenbar. Mittels einer Berechnungsvorschrift kann beispielsweise ein Anteil des Geheimnisses auch redundant auf mindestens zwei Teilgeheimnisse aufgeteilt werden. Insbesondere bei einer redundanten Aufteilung eines Geheimnisses umfassen die entsprechenden Teilinformationen ganz oder teilweise den gleichen Anteil an dem Geheimnis.

Das Zusammenführen der Teilgeheimnisse kann innerhalb eines Zeitraums durchgeführt werden, in dem das Steuerungs-Grundgerät mit dem Sicherheitsmodul zusammenwirkt. Das Zusammenwirken kann durch die Datenverbindung, die mechanisch oder auch drahtlos ausgebildet sein kann, ermöglicht werden.

Ein Zwischenergebnis beim Zusammenführen der Teilstücke kann temporär in einem Zwischenspeicher des Sicherheitsmoduls zur Verarbeitung des dort bereitgehaltenen Inhalts bereitgestellt werden, wobei das Zwischenergebnis nach einem vorgebbaren Zeitablauf und/oder in vorgebbaren regelmäßigen Zeitabständen unkenntlich gemacht wird. Der Inhalt des Zwischenspeichers kann durch eine Stromversorgung seitens des Steuerungs-Grundgeräts gehalten werden.

Eine Abtrennung der Stromversorgung und/oder ein Abhören und/oder eine Manipulation kann im Zusammenwirken des Steuerungs-Grundgerät mit dem Sicherheitsmodul erkannt, erfasst und/oder protokolliert werden. Es kann gegebenenfalls eine Folgemaßnahme eingeleitet werden.

Es können entsprechende Mittel z.B. in Form von Sensoren eingesetzt werden, die geeignet sind zum Erkennen einer Abtrennung und/oder eines Abhörens und/oder einer Manipulation im Zusammenwirken zwischen dem Steuerungs-Grundgerät und dem Sicherheitsmodul. Abhängig vom Erkennen können entsprechende Folgemaßnahmen eingeleitet werden. Dabei kann eine derartige Folgemaßnahme sein, die eine Sicherheitsfunktion der Sicherheits-Steuerungseinrichtung betrifft, beispielsweise ein entsprechendes Alarmsignal, eine entsprechende Alarm-Nachricht, ein Löschen von Schlüsseln, eine Sperrung von Funktionalitäten oder weitere vergleichbare und/oder ergänzende Aktionen.

Zur Erhöhung des Sicherheitsniveaus können in die Berechnungsvorschrift für die Sicherheitsfunktion Zusatzdaten eingehen.

Das erste Teilgeheimnis kann dabei durch einen Wert, z.B. einen Schlüssel, repräsentiert werden, welcher aus einer sogenannten PUF (physical unclonable function) generiert wird.

Das erstes Teilgeheimnis kann dabei ein öffentlicher Schlüssel und das zweites Teilgeheimnis kann ein privater Schlüssel sein. Sowohl erstes und zweites Teilgeheimnis können aus einem öffentlichen Anteil und einem privaten Anteil bestehen, die auch private oder öffentlich Schlüssel sein.

Ein weiterer Aspekt der Erfindung ist eine Sicherheits-Steuerungseinrichtung zur Steuerung eines Geräts oder einer Anlage, umfassend:
- ein Steuerungs-Grundgerät, wobei das Steuerungs-Grundgerät derart ausgebildet und eingerichtet ist, dass mittels des Ablaufs eines Steuerungsprogramms im Steuerungs-Grundgerät ein mit dem Steuerungs-Grundgerät verbindbares oder verbundenes Gerät, oder eine damit verbindbare oder verbundene Anlage, steuerbar ist, und
- ein Sicherheitsmodul, welches zur Bereitstellung oder Ausführung einer kryptographischen Funktionalität für das Steuerungs-Grundgerät ausgebildet und eingerichtet ist,
- wobei das Sicherheitsmodul mittels einer Datenverbindung über eine Datenschnittstelle mit dem Steuerungs-Grundgerät verbindbar oder verbunden ist,
- aufweisend:
   a) Mittel zum Bereitstellen zumindest eines ersten Teilgeheimnisses, welches im Steuerungs-Grundgerät gespeichert ist,
   b) Mittel zum Bereitstellen zumindest eines zweiten Teilgeheimnisses, welches im Sicherheitsmodul gespeichert ist,
   c) Mittel zum Zusammenführen des zumindest einen ersten und zweiten Teilgeheimnisses für das Erreichen der Sicherheitsfunktion,
      wobei die Mittel zum Zusammenführen derart ausgelegt sind, dass das zumindest eine erste Teilgeheimnis in Teilstücke einer vorgebbaren Größe bzw. Länge zerlegbar ist und die Menge an Teilstücken mit dem zumindest zweiten Teilgeheimnis schrittweise mittels einer Berechnungsvorschrift zusammengeführt werden kann, die entsprechend der Größe und Menge innerhalb eines vorgebbaren Zeitabschnitts während der Ausführung der Berechnungsvorschrift verarbeitbar sind.

Unter einem Speicher oder einer Speichereinheit kann im Zusammenhang mit der Erfindung beispielsweise ein Speicher in Form von Arbeitsspeicher (engl. Random-Access Memory, RAM) oder eine Festplatte verstanden werden. Ein Arbeitsspeicher oder ein sogenannter Cache (Pufferspeicher) kann als Zwischenspeicher oder auch flüchtiger Speicher angesehen werden. Die Festplatte kann als permanenter oder persistenter Speicher angesehen werden. Der Inhalt eines flüchtigen Speichers kann meist nur mit einer entsprechenden Stromversorgung bzw. Batteriepuffer bzw. Kondensatorpufferung gehalten werden.

Im Steuerungs-Grundgerät kann eine Stromversorgungseinheit integriert sein, welche durch Stromversorgung für das Halten des Inhalts eines (Zwischen)speichers sorgt und durch Unterbrechung der Stromversorgung das Unkenntlich machen dessen Inhalts einleitet. Mit Unterbrechung der Stromversorgung geht auch die Unterbrechung der Verbindung zwischen Steuerungs-Grundgerät und Sicherheitsmodul einher, womit die Sicherheitsfunktion nicht mehr vollständig gewährleistet werden kann. Oben genannte Manipulation kann auch durch eine Überbrückung der unterbrochenen Stromversorgung herbeigeführt werden.

Die Sicherheits-Steuerungseinrichtung kann beispielsweise als ein Automatisierungssystem, ein "Controller", eine speicherprogrammierbare Steuerung (eine sogenannte "SPS" oder "PLC"), ein Industrie-PC (ein sogenannter "IPC"), ein Computer, gegebenenfalls inklusive eines Echtzeit-Systems, eine modulare speicherprogrammierbare Steuerung oder eine ähnliche Steuerungseinrichtung ausgebildet und eingerichtet sein.

Die mittels der Sicherheits-Steuereinrichtung steuerbare Anlage beziehungsweise das steuerbare Gerät kann beispielsweise als eine Produktionsanlage, eine Werkzeugmaschine, ein Roboter, ein autonomes Transportsystem und/oder eine ähnliche Einrichtung, Vorrichtung oder Anlage ausgebildet und eingerichtet sein. Beispielsweise kann das Gerät beziehungsweise die Anlage für die Fertigungsindustrie, die Prozessindustrie, die Gebäudeautomatisierung und/oder auch die Energieerzeugung und -verteilung, für ein Verkehrssicherungssystem und/oder eine Verkehrssteuerung ausgebildet oder vorgesehen sein.

Das Steuerungs-Grundgerät kann beispielsweise einem Steuerungsgerät beziehungsweise einem Controller ohne oder mit teilweiser Sicherheitsfunktionalität oder auch vollständiger Sicherheitsfunktion entsprechen. Ein solches Steuerungsgerät kann beispielsweise als Zentraleinheit einer speicherprogrammierbaren Steuerung, als speicherprogrammierbare Steuerung, als Industrie PC, als PC oder ähnliche Einrichtung ausgebildet und eingerichtet sein.

Dabei kann das Steuerungs-Grundgerät beispielsweise ein Echtzeit-Betriebssystem umfassen, welches eine Echtzeit-Steuerung eines mit dem Grundgerät verbundenen oder verbindbaren Geräts beziehungsweise einer damit verbundenen oder verbindbaren Anlage ermöglicht.

Das erstes Teilgeheimnis kann dabei ein öffentlicher Schlüssel und das zweites Teilgeheimnis kann ein privater Schlüssel sein. Sowohl erstes und zweites Teilgeheimnis können aus einem öffentlichen Anteil und einem privaten Anteil bestehen, die auch private oder öffentlich Schlüssel sein.

Unter einem "(Gesamt-)Geheimnis", insbesondere auch als ein "Geheimnis in Form einer Zeichenkette", kann im Zusammenhang mit der Erfindung beispielsweise eine Lizenzinformation, ein kryptographischer Schlüssel, insbesondere ein symmetrischer Schlüssel oder ein privater Schlüssel eines asymmetrischen Schlüsselpaares, verstanden werden. Unter einem "Geheimnis" kann im Zusammenhang mit der Erfindung beispielsweise auch ein Passwort für einen Zugriff auf eine Lizenzinformation oder auf einen kryptographischen Schlüssel verstanden werden. Das Geheimnis kann beispielsweise anhand einer weiteren Sicherheitsrichtlinie erzeugt werden, die beispielsweise eine Schlüssellänge oder einen Berechnungsalgorithmus für den Schlüssel angibt. Insbesondere der Ausdruck "rekonstruiertes Geheimnis" kann im Zusammenhang mit der Erfindung gleichbedeutend verwendet werden.

Unter einem "Teilgeheimnis" kann im Zusammenhang mit der Erfindung beispielsweise ein Anteil an dem Geheimnis verstanden werden, das vorzugsweise von einer der Komponenten eines Gerätes oder einer Anlage gespeichert wird. Ein Geheimnis in Form einer Zeichenkette kann beispielsweise auf mehrere Teilzeichenketten aufgeteilt werden, wobei insbesondere ein Teilgeheimnis zumindest einen Teil der Teilzeichenketten umfasst und somit in Teilstücke unterteilt sein kann.

Unter "sicherheitsgeschützt" kann im Zusammenhang mit der Erfindung beispielsweise verstanden werden, dass insbesondere nur lesend auf eine sicherheitsgeschützte Komponente oder Speichereinheit zugegriffen werden kann oder dass insbesondere nur eine bestimmte Komponente oder bestimmte Komponenten zugreifen können. Hierzu können beispielsweise die entsprechenden sicherheitsgeschützten Komponenten Schutzmodule oder Versiegelungen aufweisen.

Eine Datenschnittstelle kann zwischen dem Sicherheitsmodul und dem Steuerungs-Grundgerät ausgebildet sein, welche beispielsweise eine drahtgebundene oder drahtlose Schnittstelle sein kann. Dabei kann eine erste Kopplungsschnittstelle und eine dazu passende zweite Kopplungschnittstelle beispielsweise über eine Kombination von entsprechend komplementären Steckverbinder-Komponenten oder auch über entsprechende Kontaktflächen oder -stifte erfolgen. Dabei kann die Schnittstelle als eine serielle oder parallele Schnittstelle ausgebildet und eingerichtet sein. Weiterhin kann die Schnittstelle zwischen Sicherheitsmodul und Steuerungs-Grundgerät auch als Drahtlos-Schnittstelle, z.B. eine WLAN-, eine Bluetooth- oder eine NFC-Schnittstelle (NFC: Near Field Communication) ausgebildet und eingerichtet sein. Bei einer Drahtlosschnittstelle kann die Stromzufuhr ähnlich wie bei einem drahtlosen Laden bei Mobilfunkgeräten implementiert sein.

Weiterhin kann das Sicherheitsmodul zudem auch mechanisch mit dem Steuerungs-Grundgerät verbunden sein, insbesondere lösbar mit dem Steuerungs-Grundgerät verbunden sein. Derartige Verbindungen können beispielsweise über entsprechende Verrastungen, Verklemmungen, Verschraubungen oder beliebige Kombinationen davon erfolgen.

Zudem kann vorgesehen sein, dass die Energieversorgung des Sicherheitsmoduls über das Steuerungs-Grundgerät erfolgt, beispielsweise über Kopplungsschnittstellen bzw. darin integrierte Schnittstellen zur Energieversorgung. Das Sicherheitsmodul kann auch eine eigene Energiequelle umfassen, wie beispielsweise eine Batterie, ein wiederaufladbarerer Akku, ein Kondensator und/oder eine vergleichbare Energiequelle. Die Energiequelle des Sicherheitsmoduls dient der Pufferung des Zwischenspeichers, um dessen Inhalt bei einer Auftrennung der oben genannten Verbindung zwischen Steuerungs-Grundgerät und Sicherheitsmodul unkenntlich machen zu können.

Die Sicherheitsfunktion der Sicherheits-Steuereinrichtung kann beispielsweise jede Funktion zur Verschlüsselung, zum Schutz der Vertraulichkeit, zum Integritätsschutz, zur Authentifikation von Daten und/oder Ähnlichem bestehen. Daten können dabei z.B. Nutzerdaten, Steuerdaten, Konfigurationsdaten und/oder administrative Daten sein.

Dabei wird die jeweilige Sicherheitsfunktion der Sicherheits-Steuereinrichtung durch ein Zusammenwirken von Steuerungs-Grundgerät und Sicherheitsmodul erreicht.

Dabei wird unter einem gelösten Sicherheitsmodul ein solches verstanden, welches zumindest keine Verbindung mehr mit dem Steuerungs-Grundgerät aufweist. Dementsprechend ist keine Stromversorgung für das Sicherheitsmodul durch das Steuerungs-Grundgerät mehr gegeben. Demnach ist auch im Zwischenspeicher dann kein Geheimnis gespeichert.

Dabei kann das Trennen der Verbindung zwischen dem Steuerungs-Grundgerät und dem Sicherheitsmodul beispielsweise durch räumliche Trennung der Schnittstellen-Verbindungselemente von Steuerungs-Grundgerät und Sicherheitsmodul erfolgen. Das Herstellen der Verbindung zwischen dem Steuerungs-Grundgerät und dem Sicherheitsmodul kann beispielsweise mittels Annähern und/oder Kontaktieren eines Schnittstellen-Verbindungselements des Sicherheitsmoduls und des Schnittstellen-Verbindungselements des Steuerungs-Grundgeräts erfolgen. Dabei kann das Herstellen der Verbindung weiterhin auch eine nachfolgende Kommunikation zur Herstellung einer funktionierenden Datenverbindung umfassen.

Kopplungsschnittstellen-Verbindungselemente von Steuerungs-Grundgerät und dem jeweiligen Sicherheitsmodul können beispielsweise entsprechend zusammenwirkende Steckerelemente, Kontaktelemente oder auch Antennen umfassen oder aus solchen bestehen. Weiterhin kann das Sicherheitsmodul entsprechend einem Sicherheitsmodul gemäß der vorliegenden Beschreibung ausgebildet und eingerichtet sein.

Des Weiteren wird ein Computerprogrammprodukt mit Programmcodemitteln zur Durchführung des Verfahrens nach einem der vorangehenden Verfahrensansprüche beansprucht, wenn es auf einer Sicherheits-Steuerungseinrichtung nach einem der vorangehenden Einrichtungsansprüche abläuft oder auf einem computerlesbaren Medium gespeichert ist.

Zusätzlich kann eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine sein.

Die Verfahren, Vorrichtungen und Computerprogramm(produkte) können entsprechend der Weiterbildungen/Ausführungsformen de oben genannten Sicherheits-Steuereinrichtung, Sicherheitsmodul und Steuerungsgrundgerät und deren Weiterbildungen/Ausführungsformen ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
Die Figur beispielhaft eine Sicherheits-Steuerungseinrichtung mit Steuerungs-Grundgerät und mit Sicherheitsmodul zur Steuerung einer Anlage.

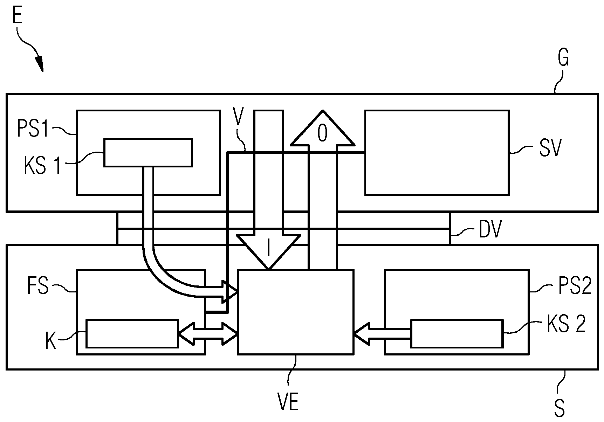

Fig. 1 zeigt eine Sicherheits-Steuerungseinrichtung E zur Steuerung einer in der Figur nicht dargestellten Anlage. Über eine Datenverbindung DV mittels einer Daten- bzw. eine I/O-Schnittstelle können Eingabedaten I und Ausgabedaten O zwischen einem Steuerungs-Grundgerät G und zumindest einem Sicherheitsmodul S ausgetauscht werden. Das Sicherheitsmodul kann ein Security-Token sein. Die Verbindung bzw. ein Zusammenwirken des genannten Geräts G und des genannten Moduls S kann über eine erste Kopplungsschnittstelle, z.B. ein Steckerelement, und eine zur ersten Kopplungsschnittstelle passenden zweiten Kopplungsschnittstelle, z.B. ein entsprechendes Gegen-Steckerelement (die beide in der Figur nicht explizit dargestellt sind), hergestellt werden. Zudem umfasst das Steuerungs-Grundgerät eine Steuerungseinheit beispielsweise ausgestaltet als Stromversorgungseinheit SV, die über eine Versorgungsanbindung V, welche in die Datenverbindung DV integriert sein kann, mit einem flüchtigen Zwischenspeicher FS des Sicherheitsmoduls S verbindbar oder verbunden ist. Dann sind die Kopplungsschnittstellen auch als Datenschnittschnittstellen ausgebildet. Das Sicherheitsmodul weist zudem eine Verarbeitungseinheit VE mit einem Prozessor auf, wobei in einem persistenten Speicher PS2 des Sicherheitsmoduls ein Teilgeheimnis z.B. in Form eines Schlüssels KS2 oder einer Ableitung davon abgelegt ist. Im persistenten Speicher PS1 des Steuerungsgrundgeräts G ist ebenso ein Teilgeheimnis KS1 abgelegt. Über die Datenverbindung DV wird bei bestehender Stromversorgung durch SV das Teilgeheimnis KS1 zur Verarbeitungseinheit VE übertragen. Die Verarbeitungseinheit VE holt aus dem Speicher PS2 das Teilgeheimnis KS2. Zur Berechnung der kryptographischen Funktion z.B. Verschlüsselung wird das benötigte Geheimnis (geheimer Schlüssel, privater Schlüssel) auf mehrere Teilgeheimnisse KS1, KS2 aufgeteilt. Dabei sollte jedes Teilgeheimnis für sich genommen die jeweiligen Sicherheitsanforderungen an die geforderte kryptographische Stärke erfüllen (z.B. 128-bit symmetrische Sicherheit).

Teilgeheimnis KS1 kann sequentiell in Teilstücke unterteilt übergeben und in einem inkrementell ablaufenden Prozess durch die kryptographische Verarbeitungseinheit VE mit Teilgeheimnis KS2 und ggf. mit weiteren Eingabedaten verbunden werden. Dadurch ist sichergestellt, dass ein Angreifer, der das Sicherheitsmodul im Betrieb abtrennt, nur einen Bruchteil des Teilgeheimnisses KS1 erhält. Der Wert eines Gesamtgeheimnisses tritt hierbei nicht explizit in Erscheinung.

Die Zusammenführung mit Teilgeheimnis KS2 (und optional weiteren Teilgeheimnissen und weiteren Zusatzdaten) erfolgt dann derart, dass zu einem bestimmten Zeitpunkt lediglich k-bit des Teilgeheimnis KS1 in der Verarbeitungseinheit VE unverarbeitet vorliegt. Die jeweiligen Teilstücke (k-bit) von Teilgeheimnis KS1 sind hinreichend klein, damit ein sogenannter Brute-Force-Angriff auf den jeweils nicht im Sicherheitsmodul vorliegenden Teil ausgeschlossen werden kann.

Die genutzte kryptographische Funktion sollte so gestaltet sein, dass:
1. eine inkrementelle/sequentielle Übergabe des Teilgeheimnisses KS1 in einem Schritt n
   möglich ist und dabei ein Zwischenergebnis , abgekürzt ZEn, entsteht.
2. Die Rekonstruktion des Teilgeheimnisses KS1 aus ZEn nach Beendigung von Schritt n nicht möglich ist.
   Das Sicherungs-Grundgerät und das Sicherheitsmodul können über geeignete Fehlerzähler ausschließen, dass das Teilgeheimnis KS1 schrittweise entwendet wird. Z.B. kann nach einer vorgegebenen Anzahl von Unterbrechungen während der Berechnung eines oder beide Teilgeheimnisse KS1 oder KS2 endgültig verworfen werden.

Ein Teil des kryptographischen Geheimnisses, d.h. das Teilgeheimnis KS1) wird ausschließlich außerhalb der Sicherheitsmoduls im Speicher des Steuerungs-Grundgeräts G persistent im Speicher PS1 gespeichert. Ein anderer Teil (Teilgeheimnis KS2) wird ausschließlich auf dem Sicherheitsmodul PS2 persistent im Speicher PS2 gespeichert. Die Verarbeitungseinheit VE ermöglicht vorzugsweise eine serielle Verarbeitung des Teilgeheimnisses KS1.

Ein sogenannter MAC (Message Authentication Code), mit K gekennzeichnet, kann auf dem Sicherheitsmodul generiert werden und ggf. direkt ausgegeben wird.

Eine Ausführungsform sieht vor, dass K im Zwischenspeicher FS des Sicherheitsmoduls hinterlegt wird:
D: Daten
KS2: Teilgeheimnis 2
KS1[x]: Teilgeheimnis 1 bit x, wobei bit x als Teilstück bezeichnet werden kann.
H: geeignete kryptographische Einwegfunktion, z.B. HMAC
MAC := H(H(H(D | KS2 | KS1[0]) | KS1[1]) | KS1[n]), wobei "|" die serielle Verarbeitung der Teilstücke 0 bis n ausdrückt.

Es kann auch eine Blockchiffre, z.B. AES in einem MAC-Mode zur Berechnung eines Nachrichtenauthentisierungscodes verwendet (insbesondere CBC-MAC). Dabei wird jeweils ein Eingabeblock, bei AES z.B. 128 bit, abhängig von dem aktuell bearbeiteten Bit i des ersten Teilgeheimnisses, d.h. KS1[i] bestimmt.

Beim Auftrennen der Verbindung zum Steuerungs-Grundgerät geht K auf dem Sicherheitsmodul und, falls in FS (zwischen)gespeichert, im Zwischenspeicher verloren. Die sequentielle Verarbeitung von KS1 kann nur weitergeführt bzw. rekonstruiert werden, wenn das Sicherheitsmodul wieder mit demselben Steuerungs-Grundgerät verbunden wird und Teilgeheimnis KS1 erneut an VE zur Berechnung übergeben wird.

Zusätzlich kann das Sicherheitsmodul eine Logik enthalten, die den Spannungsabfall beim Trennen der Stromverbindung V erkennt, und zusätzlich ein aktives Überschreiben des flüchtigen Zwischenspeichers FS auslöst. Dazu muss auf das Sicherheitsmodul ein (kleiner) Energiepuffer enthalten sein, der den flüchtigen Zwischenspeicher FS ausreichend für den Löschvorgang versorgt.

Die Steckverbindung zwischen Grundgerät und modularer Sicherheitskomponente kann so ausgeführt werden, dass eine Überbrückung der Stromversorgung beim Auftrennen der Stromverbindung V konstruktiv ver-/behindert wird. Der Steckverbinder kann einen seitlichen Zugang zu den Steckkontakten durch eine Wand mechanisch verhindern.

Die modulare Sicherheitskomponente kann zusätzlich eine Sensorik aufweisen, die eine Überbrückung der Stromversorgung durch das Steuerungs-Grundgerät erkennt und den Inhalt des flüchtigen Zwischenspeichers zerstört. Dazu kann z.B. der Spannungspegel, ein Innenwiderstand oder eine Impedanz der Stromversorgung gemessen und hinsichtlich einer unzulässigen Manipulation geprüft werden.
Der flüchtige Zwischenspeicher auf der modularen Sicherheitskomponente kann regelmäßig zufällig maskiert werden (Zufallsmaske kann auch im flüchtigen Zwischenspeicher gehalten werden). Dadurch können Einbrenneffekte im flüchtigen Zwischenspeicher verhindert werden. D.h. dass der Speicherinhalt des Geheimnisses K kann nicht im Klartext gespeichert ist, sondern nur in maskierter Form abhängig von einer zufällig oder pseudozufällig erzeugten, wechselnden Maske (z.B. Kstore := K XOR Mask).

Die Flüchtigkeit des Zwischenspeichers für das Teilgeheimnis KS1 (typischerweise einige 100bit) kann durch geeignete Maßnahmen erhöht werden, in dem mögliche alternative Speicherarten zu klassischen DRAM verwendet werden. Speichertechnologien oder Registern bzw. Flip-Flops sind z.B.:
- zirkulares Schieberegister, um wiederum Einbrenneffekte zu vermeiden
- Verzögerungsleitung (Laufzeitspeicher, delay line)

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zum Erreichen einer Sicherheitsfunktion für eine Sicherheits-Steuerungseinrichtung (E) zur Steuerung eines Geräts oder einer Anlage, mit den Schritten:
- Bereitstellen eines Steuerungs-Grundgerätes (G) zum Steuern eines verbundenen Gerätes oder einer verbundenen Anlage mittels des Ablaufs eines Steuerungsprogramms im Steuerungs-Grundgerät
- Bereitstellen eines Sicherheitsmoduls (S) zur Bereitstellung oder Ausführung einer kryptographischen Funktionalität für das Steuerungs-Grundgerät (G) und Verbinden des Sicherheitsmoduls (S) mittels einer Datenverbindung mit dem Steuerungs-Grundgerät (G)
- Bereitstellen zumindest eines ersten Teilgeheimnisses KS1), welches im Steuerungs-Grundgerät (G) gespeichert ist,
- Bereitstellen zumindest eines zweiten Teilgeheimnisses KS2), welches im Sicherheitsmodul (S) gespeichert ist,
- Zusammenführen des zumindest einen ersten und zweiten Teilgeheimnisses für das Erreichen der Sicherheitsfunktion,
- **gekennzeichnet durch** Zerlegen des zumindest einen ersten Teilgeheimnisses in eine Vielzahl von Teilstücken einer vorgebbaren Größe und schrittweise-Zusammenführen der Vielzahl von Teilstücken mit dem zumindest zweiten Teilgeheimnis mittels einer Berechnungsvorschrift, wobei die Teilstücke entsprechend der Größe und Menge innerhalb eines vorgebbaren Zeitabschnitts während der Ausführung der Berechnungsvorschrift verarbeitet werden.

2. Verfahren nach dem vorhergehenden Anspruch, **dadurch gekennzeichnet, dass** in jeden Einzelschritt der Berechnungsvorschrift nur diejenigen Teilstücke eingehen, welche in dem Einzelschritt verarbeitet werden können.

3. Verfahren nach einem der vorhergehenden Ansprüche, **dadurch gekennzeichnet, dass** das Zusammenführen innerhalb eines Zeitraums durchgeführt wird, in dem das Steuerungs-Grundgerät (G) mit dem Sicherheitsmodul (S) zusammenwirkt.

4. Verfahren nach einem der vorhergehenden Ansprüche, **dadurch gekennzeichnet, dass** ein Zwischenergebnis beim Zusammenführen der Teilstücke temporär in einem Zwischenspeicher (FS) des Sicherheitsmoduls zur Verarbeitung des dort bereitgehaltenen Inhalts bereitgestellt wird, wobei das Zwischenergebnis nach einem vorgebbaren Zeitablauf und/oder in vorgebbaren regelmäßigen Zeitabständen unkenntlich gemacht wird.

5. Verfahren nach dem vorhergehenden Anspruch, **dadurch gekennzeichnet, dass** der Inhalt des Zwischenspeichers durch eine Stromversorgung (SV) seitens des Steuerungs-Grundgeräts (G) gehalten wird.

6. Verfahren nach einem der vorhergehenden Ansprüche, **dadurch gekennzeichnet, dass** eine Abtrennung der Stromversorgung und/oder ein Abhören und/oder eine Manipulation im Zusammenwirken des Steuerungs-Grundgerät (G) mit dem Sicherheitsmodul (S) erkannt, erfasst und/oder protokolliert wird und gegebenenfalls eine Folgemaßnahme eingeleitet wird.

7. Verfahren nach einem der vorhergehenden Ansprüche, **dadurch gekennzeichnet, dass** in die Berechnungsvorschrift für die Sicherheitsfunktion Zusatzdaten eingehen.

8. Verfahren nach einem der vorhergehenden Ansprüche, **dadurch gekennzeichnet, dass** das erste Teilgeheimnis durch einen Wert repräsentiert wird, welcher aus einer sogenannten PUF generiert wird.

9. Sicherheits-Steuerungseinrichtung (E) zur Steuerung eines Geräts oder einer Anlage, umfassend:
- ein Steuerungs-Grundgerät (G), wobei das Steuerungs-Grundgerät (G) derart ausgebildet und eingerichtet ist, dass mittels des Ablaufs eines Steuerungsprogramms im Steuerungs-Grundgerät (G) ein mit dem Steuerungs-Grundgerät (G) verbindbares oder verbundenes Gerät, oder eine damit verbindbare oder verbundene Anlage, steuerbar ist, und
- ein Sicherheitsmodul (S), welches zur Bereitstellung oder Ausführung einer kryptographischen Funktionalität für das Steuerungs-Grundgerät (G) ausgebildet und eingerichtet ist,
- wobei das Sicherheitsmodul (S) mittels einer Datenverbindung (DV) über eine Datenschnittstelle mit dem Steuerungs-Grundgerät (G) verbindbar oder verbunden ist,
- aufweisend:
a) Mittel zum Bereitstellen zumindest eines ersten Teilgeheimnisses (KS1), welches im Steuerungs-Grundgerät (G) gespeichert ist,
b) Mittel zum Bereitstellen zumindest eines zweiten Teilgeheimnisses (KS2), welches im Sicherheitsmodul (S) gespeichert ist,
c) Mittel zum Zusammenführen des zumindest einen ersten und zweiten Teilgeheimnisses für das Erreichen der Sicherheitsfunktion, **dadurch gekennzeichnet, dass** die Mittel zum Zusammenführen derart ausgelegt sind, dass das zumindest eine erste Teilgeheimnis in eine Vielzahl von Teilstücken einer vorgebbaren Größe zerlegt ist und die Menge an Teilstücken mit dem zumindest zweiten Teilgeheimnis schrittweise mittels einer Berechnungsvorschrift zusammengeführt werden kann, die entsprechend der Größe und Menge innerhalb eines vorgebbaren Zeitabschnitts während der Ausführung der Berechnungsvorschrift verarbeitet werden.

10. Sicherheits-Steuerungseinrichtung (E) nach dem vorhergehenden Anspruch, **dadurch gekennzeichnet, dass** in jeden Einzelschritt der Berechnungsvorschrift nur diejenigen Teilstücke einbezogen sind, welche in dem Einzelschritt verarbeitet werden können.

11. Sicherheits-Steuerungseinrichtung (E) nach einem der vorhergehenden Einrichtungsansprüchen, **dadurch gekennzeichnet, dass** das Zusammenführen innerhalb eines Zeitraums durchführbar ist, in dem das Steuerungs-Grundgerät (G) mit dem Sicherheitsmodul (S) mittels der Datenverbindung zusammenwirkt.

12. Sicherheits-Steuerungseinrichtung (E) nach einem der vorhergehenden Einrichtungsansprüchen, **dadurch gekennzeichnet, dass** ein Zwischenergebnis beim Zusammenführen der Teilstücke temporär in einem Zwischenspeicher des Sicherheitsmoduls (S) zur Verarbeitung des dort bereitgehaltenen Inhalts bereitgestellt ist, wobei das Zwischenergebnis nach einem vorgebbaren Zeitablauf und/oder in vorgebbaren regelmäßigen Zeitabständen unkenntlich machbar ist.

13. Sicherheits-Steuerungseinrichtung (E) nach dem vorhergehenden Anspruch, **dadurch gekennzeichnet, dass** der Inhalt des Zwischenspeichers durch eine Stromversorgung seitens des Steuerungs-Grundgeräts (G) gehalten werden kann.

14. Sicherheits-Steuerungseinrichtung (E) nach einem der vorhergehenden Einrichtungsansprüchen, **dadurch gekennzeichnet, dass** eine Abtrennung der Stromversorgung und/oder ein Abhören und/oder eine Manipulation im Zusammenwirken des Steuerungs-Grundgerät (G) mit dem Sicherheitsmodul (S) erkennbar, erfassbar und/oder protokollierbar ist und gegebenenfalls eine Folgemaßnahme eingeleitet werden kann.

15. Computerprogrammprodukt mit Programmcodemitteln zur Durchführung des Verfahrens nach einem der vorangehenden Verfahrensansprüche, wenn es auf einer Sicherheits-Steuerungseinrichtung (E) nach einem der vorangehenden Einrichtungsansprüche abläuft oder auf einem computerlesbaren Medium gespeichert ist.

## Claims

1. Method for achieving a safety function for a safety control device (E) for controlling an appliance or an installation, having the steps of:
- providing a base control unit (G) for controlling a connected appliance or a connected installation by means of the execution of a control program in the base control unit,
- providing a security module (S) for providing or performing a cryptographic functionality for the base control unit (G), and connecting the security module (S) to the base control unit (G) by means of a data connection,
- providing at least one first partial secret (KS1), which is stored in the base control unit (G),
- providing at least one second partial secret (KS2), which is stored in the security module (S),
- combining the at least one first and one second partial secret to achieve the safety function,
**characterized by**
- breaking down the at least one first partial secret into a multiplicity of parts of a prescribable size and combining the multiplicity of parts with the at least one second partial secret in steps by means of a computation rule, the parts being processed according to size and quantity within a prescribable period of time during the execution of the computation rule.

2. Method according to the preceding claim, **characterized in that** each individual step of the computation rule includes only those parts that can be processed in the individual step.

3. Method according to either of the preceding claims, **characterized in that** the combining is performed within a period in which the base control unit (G) acts in combination with the security module (S).

4. Method according to one of the preceding claims, **characterized in that** an interim result for the combining of the parts is temporarily provided in a buffer store (FS) of the security module for the purpose of processing the content held therein, the interim result being rendered unrecognizable after a prescribable time has elapsed and/or at prescribable regular intervals of time.

5. Method according to the preceding claim, **characterized in that** the content of the buffer store is kept by a power supply (SV) in the base control unit (G).

6. Method according to one of the preceding claims, **characterized in that** disconnection of the power supply and/or eavesdropping and/or manipulation in the combined action of the base control unit (G) with the security module (S) is identified, detected and/or logged and a follow-up measure is initiated if necessary.

7. Method according to one of the preceding claims, **characterized in that** the computation rule includes additional data for the safety function.

8. Method according to one of the preceding claims, **characterized in that** the first partial secret is represented by a value generated from what is known as a PUF.

9. Safety control device (E) for controlling an appliance or an installation, comprising:
- a base control unit (G), wherein the base control unit (G) is designed and configured such that an appliance connectable or connected to the base control unit (G), or an installation connectable or connected thereto, is controllable by means of the execution of a control program in the base control unit (G), and
- a security module (S) is designed and configured to provide or perform a cryptographic functionality for the base control unit (G),
- wherein the security module (S) is connectable or connected to the base control unit (G) by means of a data connection (DV) via a data interface,
- having:
a) means for providing at least one first partial secret (KS1), which is stored in the base control unit (G),
b) means for providing at least one second partial secret (KS2), which is stored in the security module (S),
c) means for combining the at least one first and one second partial secret to achieve the safety function,
**characterized in that**
the combining means are designed such that the at least one first partial secret is broken down into a multiplicity of parts of a prescribable size and
the quantity of parts can be combined with the at least one second partial secret in steps by means of a computation rule, said parts being processed according to size and quantity within a prescribable period of time during the execution of the computation rule.

10. Safety control device (E) according to the preceding claim, **characterized in that** each individual step of the computation rule incorporates only those parts that can be processed in the individual step.

11. Safety control device (E) according to one of the preceding device claims, **characterized in that** the combining is performable within a period in which the base control unit (G) acts in combination with the security module (S) by means of the data connection.

12. Safety control device (E) according to one of the preceding device claims, **characterized in that** an interim result for the combining of the parts is temporarily provided in a buffer store of the security module (S) for the purpose of processing the content held therein, the interim result being able to be rendered unrecognizable after a prescribable time has elapsed and/or at prescribable regular intervals of time.

13. Safety control device (E) according to the preceding claim, **characterized in that** the content of the buffer store can be kept by a power supply in the base control unit (G).

14. Safety control device (E) according to one of the preceding device claims, **characterized in that** disconnection of the power supply and/or eavesdropping and/or manipulation in the combined action of the base control unit (G) with the security module (S) is identifiable, detectable and/or loggable and a follow-up measure can be initiated if necessary.

15. Computer program product having program code means for performing the method according to one of the preceding method claims when said computer program product is executed on a safety control device (E) according to one of the preceding device claims or is stored on a computer-readable medium.

## Revendications

1. Procédé permettant de réaliser une fonction de sécurité pour un dispositif de sécurité et de commande (E) permettant de commander un appareil ou une installation, avec les étapes de :
- mise à disposition d'un appareil de base de commande (G) permettant de commander un appareil relié ou une installation reliée au moyen du déroulement d'un programme de commande dans l'appareil de base de commande,
- mise à disposition d'un module de sécurité (S) permettant de mettre à disposition ou de mettre en œuvre une fonctionnalité cryptographique pour l'appareil de base de commande (G) et de relier le module de sécurité (S) au moyen d'une liaison de données avec l'appareil de base de commande (G),
- mise à disposition d'au moins un premier secret partiel (KS1) qui est mis en mémoire dans l'appareil de base de commande (G),
- mise à disposition d'au moins un deuxième secret partiel (KS2) qui est mis en mémoire dans le module de sécurité (S),
- réunion des au moins un premier et deuxième secrets partiels pour la réalisation de la fonction de sécurité,
**caractérisé par**
- le fractionnement de l'au moins un premier secret partiel en une pluralité de parties d'une grandeur apte à être prédéfinie et la réunion progressive de la pluralité de parties avec l'au moins un deuxième secret partiel au moyen d'une règle de calcul, dans lequel les parties sont traitées pendant la mise en œuvre de la règle de calcul au sein d'une période apte à être prédéfinie en fonction de la grandeur et de la quantité.

2. Procédé selon la revendication précédente, **caractérisé en ce que** n'entrent dans chaque étape unique de la règle de calcul que les parties qui peuvent être traitées lors de l'étape unique.

3. Procédé selon l'une des revendications précédentes, **caractérisé en ce que** la réunion est effectuée au sein d'un laps de temps dans lequel l'appareil de base de commande (G) coopère avec le module de sécurité (S).

4. Procédé selon l'une des revendications précédentes, **caractérisé en ce qu'**un résultat intermédiaire est mis à disposition temporairement dans une mémoire intermédiaire (FS) du module de sécurité pour traiter le contenu qui y est maintenu à disposition lors de la réunion des parties, dans lequel le résultat intermédiaire est rendu illisible après un délai apte à être prédéfini et/ou dans des intervalles de temps réguliers aptes à être prédéfinis.

5. Procédé selon la revendication précédente, **caractérisé en ce que** le contenu de la mémoire intermédiaire est maintenu par le biais d'une alimentation électrique (SV) du côté de l'appareil de base de commande (G).

6. Procédé selon l'une des revendications précédentes, **caractérisé en ce que** lors de la coopération de l'appareil de base de commande (G) avec le module de sécurité (S) une séparation de l'alimentation électrique et/ou une écoute et/ou une manipulation sont reconnues, détectées et/ou consignées et le cas échéant une mesure de suivi est introduite.

7. Procédé selon l'une des revendications précédentes, **caractérisé en ce que** des données supplémentaires entrent dans la règle de calcul pour la fonction de sécurité.

8. Procédé selon l'une des revendications précédentes, **caractérisé en ce que** le premier secret partiel est représenté par une valeur qui est générée à partir de ce que l'on appelle une fonction physique inclonable.

9. Dispositif de commande et de sécurité (E) permettant de commander un appareil ou une installation, comprenant :
- un appareil de base de commande (G), dans lequel l'appareil de base de commande (G) est configuré et installé de telle sorte que, au moyen du déroulement d'un programme de commande dans l'appareil de base de commande (G) un appareil apte à être relié ou relié avec l'appareil de base de commande (G), ou une installation apte à être reliée ou reliée avec celui-ci, est apte à être commandé, et
- un module de sécurité (S) qui est configuré et installé pour mettre à disposition ou mettre en œuvre une fonctionnalité cryptographique pour l'appareil de base de commande (G),
- dans lequel le module de sécurité (S) est apte à être relié ou est relié avec l'appareil de base de commande (G) au moyen d'une liaison de données (DV) via une interface de données,
- présentant :
a) des moyens permettant de mettre à disposition au moins un premier secret partiel (KS1) qui est mis en mémoire dans l'appareil de base de commande (G),
b) des moyens permettant de mettre à disposition au moins un deuxième secret partiel (KS2) qui est mis en mémoire dans le module de sécurité (S),
c) des moyens permettant de réunir les au moins un premier et deuxième secrets partiels pour la réalisation de la fonction de sécurité,
**caractérisé en ce que** les moyens permettant de réunir sont conçus de telle sorte que l'au moins un premier secret partiel est fractionné en une pluralité de parties d'une grandeur apte à être prédéfinie et
la quantité de parties peut être réunie progressivement avec l'au moins deuxième secret partiel au moyen d'une règle de calcul qui est traitée pendant la mise en œuvre de la règle de calcul au sein d'une période apte à être prédéfinie en fonction de la grandeur et de la quantité.

10. Dispositif de sécurité et de commande (E) selon la revendication précédente, **caractérisé en ce que** ne sont incluses dans chaque étape unique de la règle de calcul que les parties qui peuvent être traitées lors de l'étape unique.

11. Dispositif de sécurité et de commande (E) selon l'une des revendications de dispositif précédentes, **caractérisé en ce que** la réunion peut être exécutée au sein d'un laps de temps dans lequel l'appareil de base de commande (G) coopère avec le module de sécurité (S) au moyen de la liaison de données.

12. Dispositif de sécurité et de commande (E) selon l'une des revendications de dispositif précédentes, **caractérisé en ce qu'**un résultat intermédiaire est mis à disposition temporairement dans une mémoire intermédiaire du module de sécurité (S) pour traiter le contenu qui y est maintenu à disposition lors de la réunion des parties, dans lequel le résultat intermédiaire est rendu illisible après un délai apte à être prédéfini et/ou dans des intervalles de temps réguliers aptes à être prédéfinis.

13. Dispositif de sécurité et de commande (E) selon la revendication précédente, **caractérisé en ce que** le contenu de la mémoire intermédiaire peut être maintenu par le biais d'une alimentation électrique du côté de l'appareil de base de commande (G).

14. Dispositif de sécurité et de commande (E) selon l'une des revendications de dispositif précédentes, **caractérisé en ce que** lors de la coopération de l'appareil de base de commande (G) avec le module de sécurité (S) une séparation de l'alimentation électrique et/ou une écoute et/ou une manipulation sont aptes à être reconnues, détectées et/ou consignées et le cas échéant une mesure de suivi est introduite.

15. Produit de programme informatique avec des moyens de code de programme permettant d'exécuter le dispositif selon l'une des revendications de procédé précédentes, lorsqu'il se déroule sur un dispositif de sécurité et de commande (E) selon l'une des revendications de dispositif précédentes ou est mis en mémoire sur un support lisible par un ordinateur.
